# EUROPÄISCHE PATENTANMELDUNG

(11) **EP 3 839 609 A1**
(43) Veröffentlichungstag der Anmeldung: **23.06.2021**
(21) Anmeldenummer: 19216511.6
(22) Anmeldetag: 16.12.2019
(51) Int. Cl.: G02B 27/09, F21V 14/00, G01C 15/00

(54) **LASERSYSTEM ZUR ERZEUGUNG EINER LINIENFÖRMIGEN LASERMARKIERUNG**

(71) Anmelder: Hilti Aktiengesellschaft, 9494 Schaan (LI)
(72) Erfinder: Dang, Lieu-Kim, 9473 Gams (CH)
(74) Vertreter: Hilti Aktiengesellschaft Corporate Intellectual Property

(57) **Zusammenfassung**

Lasersystem (10) zur Erzeugung einer linienförmigen Lasermarkierung (34) auf einer Projektionsfläche (33), aufweisend eine Laserstrahlquelle (11), die einen Laserstrahl (25) erzeugt und entlang einer Ausbreitungsrichtung (26) aussendet, eine als Kollimationsoptik ausgebildete erste Strahlformungsoptik (12) mit einer ersten optischen Achse (13) und einen Kegelspiegel (14), der als gerader Kegel mit einer Kegelachse (15) und einer reflektierenden Mantelfläche (22) ausgebildet ist und im Strahlengang des Laserstrahls hinter der Kollimationsoptik (12) angeordnet ist, wobei die Kegelachse (15) parallel zur ersten optischen Achse (13) ausgerichtet ist. Das Lasersystem (10) weist eine zweite Strahlformungsoptik (16) auf, die im Strahlengang des Laserstrahls vor dem Kegelspiegel (14) angeordnet ist und den Laserstrahl in einen Ringstrahl (28) mit einem Intensitätsminimum in der Strahlmitte umformt.

## Beschreibung

### Technisches Gebiet

Die vorliegende Erfindung betrifft ein Lasersystem zur Erzeugung einer linienförmigen Lasermarkierung gemäß dem Oberbegriff des Anspruchs 1.

### Stand der Technik

Um Nivellier- oder Markierungsarbeiten im Innen- und Außenbereich durchzuführen, sind Lasersysteme bekannt, die auf einer Projektionsfläche eine linienförmige Lasermarkierung erzeugen. Bei diesen Lasersystemen wird unterschieden zwischen Rotationslasern, die die linienförmige Lasermarkierung durch Rotation einer Strahlumlenkoptik um eine Rotationsachse erzeugen, und Linienlasern, die die linienförmige Lasermarkierung mithilfe einer Strahlformungsoptik, beispielsweise einer Zylinderlinse, einem Prisma oder einem Kegelspiegel, erzeugt. Damit die bekannten Lasersystemen ohne Schutzmaßnahmen in Form von Schutzbrillen und Reflektoren eingesetzt werden können, muss die Laserleistung begrenzt werden, um Schäden des menschlichen Auges zu verhindern. Für Lasersysteme der Laserklasse 2 oder 2M beträgt die maximal zulässige Laserleistung 1 mW.

Durch die Begrenzung der Laserleistung auf Werte kleiner als 1 mW weisen bekannte Lasersysteme der Laserklasse 2 oder 2M den Nachteil auf, dass die linienförmige Lasermarkierung auf der Projektionsfläche schlecht sichtbar ist. Dabei gilt, dass die linienförmige Lasermarkierung umso schlechter sichtbar ist, je breiter die Lasermarkierung auf der Projektionsfläche ist, da die Sichtbarkeit mit sinkender Leistungsdichte abnimmt. Außerdem ist die Qualität der linienförmigen Lasermarkierung auf der Projektionsfläche vom Abstand des Lasersystem zur Projektionsfläche abhängig.

EP 2 411 762 B1 offenbart den typischen Aufbau eines Lasersystems zur Erzeugung einer linienförmigen Lasermarkierung mit einem Öffnungswinkel von 360°. Das Lasersystem umfasst eine Laserstrahlquelle, die einen divergenten Laserstrahl erzeugt und entlang einer Ausbreitungsrichtung aussendet, eine als Kollimationsoptik ausgebildete Strahlformungsoptik, die den divergenten Laserstrahl in einen kollimierten Laserstrahl umformt, und einen Kegelspiegel, der als gerader Kegel mit einer Kegelachse und einer reflektierenden Mantelfläche ausgebildet ist, wobei der Kegelspiegel im Strahlengang des Laserstrahls hinter der Kollimationsoptik angeordnet ist und die Kegelachse koaxial zur optischen Achse der Kollimationsoptik ausgerichtet ist.

Das aus EP 2 411 762 B1 bekannte Lasersystem weist den Nachteil auf, dass auf der Projektionsfläche keine scharf begrenzte Lasermarkierung erzeugt wird. Die Lasermarkierung besteht aus einer Hauptlinie und mindestens einer Nebenlinie. Die Ursache für das Auftreten mehrerer Linien liegt darin, dass die Laserstrahlquelle einen Laserstrahl mit mehreren Beugungsordnungen erzeugt, die an der Kegelspitze des Kegelspiegels unterschiedlich gebeugt werden und auf der Projektionsfläche als benachbarte Linien auftreten.

### Darstellung der Erfindung

Die Aufgabe der vorliegenden Erfindung besteht in der Entwicklung eines Lasersystems, mit dem auf einer Projektionsfläche eine scharf begrenzte linienförmige Lasermarkierung mit einem Öffnungswinkel von 360° erzeugt werden kann.

Diese Aufgabe wird bei dem eingangs genannten Lasersystem erfindungsgemäß durch die Merkmale des unabhängigen Anspruchs 1 gelöst. Vorteilhafte Weiterbildungen sind in den abhängigen Ansprüchen angegeben.

Erfindungsgemäß ist das Lasersystem dadurch gekennzeichnet, dass das Lasersystem eine zweite Strahlformungsoptik mit einer zweiten optischen Achse aufweist, wobei die zweite Strahlformungsoptik im Strahlengang des Laserstrahls vor dem Kegelspiegel angeordnet ist und den Laserstrahl in einen Ringstrahl mit einem Intensitätsminimum in der Strahlmitte umformt. Das erfindungsgemäße Lasersystem ermöglicht es, auf einer Projektionsfläche eine scharf begrenzte linienförmige Lasermarkierung mit einem Öffnungswinkel von 360° zu erzeugen. Die zweite Strahlformungsoptik des erfindungsgemäßen Lasersystems formt den Laserstrahl in einen Ringstrahl um, der in der Strahlmitte ein Intensitätsminimum aufweist. Das Intensitätsminimum des Ringstrahls bietet die Möglichkeit, Beugungseffekte an der Kegelspitze zu reduzieren, wobei die Reduzierung der Beugungseffekte zu einer scharf begrenzten linienförmigen Lasermarkierung führt. Um die Beugungseffekte zu reduzieren, sollte der Ringstrahl so ausgerichtet werden, dass das Intensitätsminimum des Ringstrahls mit der Kegelachse des Kegelspiegels zusammenfällt.

Bevorzugt ist die zweite optische Achse der zweiten Strahlformungsoptik koaxial zur Kegelachse des Kegelspiegels angeordnet. Durch die koaxiale Anordnung der zweiten optischen Achse und der Kegelachse liegt das Intensitätsminimum des Ringstrahls auf der Kegelachse und Beugungseffekte an der Kegelspitze des Kegelspiegels sind reduziert, so dass auf der Projektionsfläche eine scharf begrenzte Lasermarkierung erzeugt wird.

Bevorzugt ist die zweite Strahlformungsoptik als Beugungsgitter ausgebildet. Die Ausbildung der zweiten Strahlformungsoptik als Beugungsgitter hat den Vorteil, dass die strahlformenden Eigenschaften des Beugungsgitters beispielsweise mittels der Parameter "Gitterform", "Gitterbreite" und "Gitterhöhe" an die Wellenlänge und den Strahldurchmesser des Laserstrahls angepasst werden können. Als zweite optische Achse des Beugungsgitters ist eine Gerade definiert, die durch das Zentrum der Beugungsstrukturen verläuft und senkrecht auf der Oberfläche des Beugungsgitters steht.

In einer Weiterentwicklung ist die zweite Strahlformungsoptik im Strahlengang des Laserstrahls zwischen der Laserstrahlquelle und der ersten Strahlformungsoptik angeordnet. Die Anordnung der insbesondere als Beugungsgitter ausgebildeten zweiten Strahlformungsoptik vor der Kollimationsoptik hat den Vorteil, dass eine nicht senkrecht zur Kegelachse verlaufende Ausbreitungsebene hinter dem Kegelspiegel mithilfe der Kollimationsoptik korrigiert werden kann. Wenn die Kollimationsoptik parallel zur ersten optischen Achse verstellbar ist, können der Einfallswinkel des Ringstrahls auf die Mantelfläche des Kegelspiegels und die Ausrichtung der Ausbreitungsebene, in der der Laserstrahl nach dem Kegelspiegel verläuft
In einer bevorzugten ersten Variante ist die erste Strahlformungsoptik parallel zur ersten optischen Achse verstellbar ausgebildet. Eine erste Strahlformungsoptik, die parallel zur ersten optischen Achse verstellbar ist, hat den Vorteil, dass der Ausfallswinkel des Ringstrahls und die Ausrichtung der Ausbreitungsebene, in der der Laserstrahl nach dem Kegelspiegel verläuft, verändert werden können. Ziel ist es, mit dem Kegelspiegel eine Ausbreitungsebene zu erzeugen, die senkrecht zur Kegelachse verläuft. Die Ausrichtung der Ausbreitungsebene ist durch den Ausfallswinkel des Laserstrahls festgelegt, der vom Einfallswinkel des Ringstrahls abhängt.

In einer bevorzugten zweiten Variante ist die zweite Strahlformungsoptik parallel zur zweiten optischen Achse ausgebildet. Eine verstellbare zweite Strahlformungsoptik, die parallel zur zweiten optischen Achse verstellbar ist, hat den Vorteil, dass der Einfallswinkel des Ringstrahls und die Ausrichtung der Ausbreitungsebene, in der der Laserstrahl nach dem Kegelspiegel verläuft, verändert werden können. Ziel ist es, mit dem Kegelspiegel eine Ausbreitungsebene zu erzeugen, die senkrecht zur Kegelachse verläuft. Die Ausrichtung der Ausbreitungsebene ist durch den Ausfallswinkel des Laserstrahls festgelegt, der vom Einfallswinkel des Ringstrahls abhängt.

In einer bevorzugten dritten Variante ist die erste Strahlformungsoptik parallel zur ersten optischen Achse und die zweite Strahlformungsoptik parallel zur zweiten optischen Achse verstellbar ausgebildet. Ein erfindungsgemäßes Lasersystem, bei dem die erste und zweite Strahlformungsoptik parallel zur ersten bzw. zweiten optischen Achse verstellbar sind, weist einen größeren Verstellbereich auf gegenüber Lasersystemen, bei denen die erste oder zweite Strahlformungsoptik verstellbar ist. Durch die verstellbare erste Strahlformungsoptik und die verstellbare zweite Strahlformungsoptik können der Einfallswinkel des Ringstrahls vor dem Kegelspiegel und die Ausrichtung der Ausbreitungsebene, in der der Laserstrahl nach dem Kegelspiegel verläuft, verändert werden. Ziel ist es, mit dem Kegelspiegel eine Ausbreitungsebene zu erzeugen, die senkrecht zur Kegelachse verläuft. Die Ausrichtung der Ausbreitungsebene ist durch den Ausfallswinkel des Laserstrahls festgelegt, der vom Einfallswinkel des Ringstrahls abhängt.

In einer Weiterentwicklung weist das Lasersystem eine als Fokussieroptik ausgebildete dritte Strahlformungsoptik mit einer dritten optischen Achse auf. Als Fokussieroptik ist ein optisches Element definiert, das eine endliche Brennweite aufweist und einen auftreffenden Laserstrahl fokussiert, wobei der Strahldurchmesser des Laserstrahls in der Fokuslage minimal ist. Die Erweiterung des erfindungsgemäßen Lasersystems um eine Fokussieroptik hat den Vorteil, dass der Strahldurchmesser des Laserstrahls angepasst werden kann. Ein fokussierter Laserstrahl weist im Bereich der Fokuslage einen kleineren Strahldurchmesser auf als ein nicht-fokussierter Laserstrahl. Der kleinere Strahldurchmesser hat den Vorteil, dass die die erste Strahlformungsoptik, zweite Strahlformungsoptik und der Kegelspiegel kleinere Abmessungen aufweisen können. Außerdem kann das Beugungsgitter eine gröbere Gitterstruktur aufweisen, was die Herstellung des Beugungsgitters vereinfacht bzw. die Herstellung zu geringeren Herstellungskosten ermöglicht.

Besonders bevorzugt ist die Fokussieroptik im Strahlengang des Laserstrahls vor der zweiten Strahlformungsoptik angeordnet. Die Anordnung der Fokussieroptik vor der zweiten Strahlformungsoptik, die insbesondere als Beugungsgitter ausgebildet ist, hat den Vorteil, dass durch die Fokussierung des Laserstrahls Beugungsgitter mit einer gröberen Gitterstruktur verwendet werden können, was die Herstellung des Beugungsgitters vereinfacht. Außerdem weist der Laserstrahl einen kleineren Strahldurchmesser auf, wodurch die erste Strahlformungsoptik, die zweite Strahlformungsoptik und der Kegelspiegel kleinere Abmessungen aufweisen können.

Besonders bevorzugt ist die Fokussieroptik parallel zur dritten optischen Achse verstellbar. Eine dritte Strahlformungsoptik, die parallel zur dritten optischen Achse verstellbar ist, hat den Vorteil, dass der Ausfallswinkel des Ringstrahls und die Ausrichtung der Ausbreitungsebene, in der der Laserstrahl nach dem Kegelspiegel verläuft, verändert werden können. Ziel ist es, mit dem Kegelspiegel eine Ausbreitungsebene zu erzeugen, die senkrecht zur Kegelachse verläuft. Die Ausrichtung der Ausbreitungsebene ist durch den Ausfallswinkel des Laserstrahls festgelegt, der vom Einfallswinkel des Ringstrahls abhängt.

In einer bevorzugten Ausführung weist der Laserstrahl, den die Laserstrahlquelle erzeugt, eine Strahlverteilung in Form einer Gauß-Verteilung, einer Lorentz-Verteilung oder einer Bessel-Verteilung auf. Diese Strahlverteilungen weisen keinen abrupten Sprung in der Intensität auf. Ein abrupter Sprung in der Intensität, wie er beispielweise bei einer Top Hat-Verteilung auftritt, führt zu unerwünschten Beugungseffekten am Kegelspiegel, die eine scharfe Begrenzung einer linienförmigen Lasermarkierung auf einer Projektionsfläche verhindern. Eine Laserstrahlquelle, die einen Laserstrahl mit einer Strahlverteilung in Form einer Gauß-Verteilung, Lorentz-Verteilung oder Bessel-Verteilung erzeugt, unterstützt die Erzeugung einer scharf begrenzten linienförmigen Lasermarkierung auf einer Projektionsfläche.

### Ausführungsbeispiele

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Es zeigen:
- FIG. 1: eine erste Ausführungsform eines erfindungsgemäßen Lasersystems, das eine Laserstrahlquelle, ein Beugungsgitter, eine Kollimationsoptik und einen Kegelspiegel aufweist;
- FIG. 2: eine zweite Ausführungsform eines erfindungsgemäßen Lasersystems, das sich durch eine Fokussieroptik von der ersten Ausführungsform des Lasersystems unterscheidet;
- FIG. 3: eine dritte Ausführungsform eines erfindungsgemäßen Lasersystems, das eine Laserstrahlquelle, ein Beugungsgitter, eine Kollimationsoptik und einen Kegelspiegel aufweist, wobei die Kollimationsoptik und der Kegelspiegel in einen gemeinsamen Grundkörper integriert sind;
- FIG. 4: eine vierte Ausführungsform eines erfindungsgemäßen Lasersystems, das sich durch eine Fokussieroptik von der dritten Ausführungsform des Lasersystems unterscheidet; und
- FIGN. 5A,: B eine Ausführungsform für das Beugungsgitter der Lasersysteme der FIG. 1 und FIG. 3.

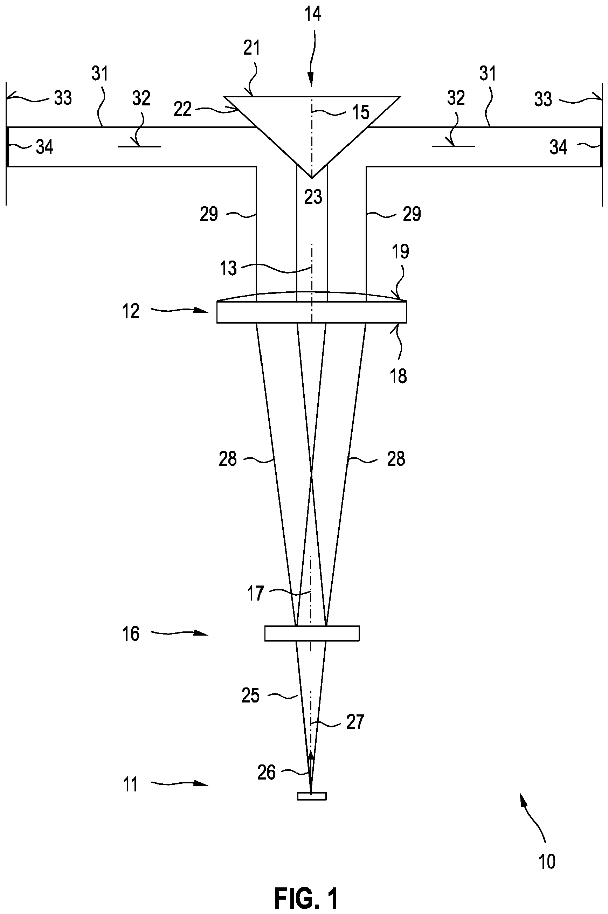

**FIG. 1** zeigt eine erste Ausführungsform eines erfindungsgemäßen Lasersystems **10** zur Erzeugung einer linienförmigen Lasermarkierung auf einer Projektionsfläche. Das Lasersystem 10, das im Folgenden als erstes Lasersystem 10 bezeichnet wird, umfasst eine Laserstrahlquelle **11,** eine erste Strahlformungsoptik **12** mit einer ersten optischen Achse **13,** einen Kegelspiegel **14** mit einer Kegelachse **15** und eine zweite Strahlformungsoptik **16** mit einer zweiten optischen Achse **17.** Die erste Strahlformungsoptik 12 ist als Kollimationsoptik und die zweite Strahlformungsoptik 16 als Beugungsgitter ausgebildet. Die Komponenten des ersten Lasersystems 10 sind in der Reihenfolge Laserstrahlquelle 11, zweite Strahlformungsoptik 16, erste Strahlformungsoptik 12 und Kegelspiegel 14 angeordnet. Dabei sind die erste optische Achse 13 der ersten Strahlformungsoptik 12, die zweite optische Achse 17 der zweiten Strahlformungsoptik 16 und die Kegelachse 15 des Kegelspiegels 14 koaxial zueinander angeordnet.

Die Laserstrahlquelle 11 kann als Halbleiterlaser mit einer Wellenlänge im sichtbaren Spektrum ausgebildet sein, beispielsweise als roter Halbleiterlaser mit einer Wellenlänge von 635 nm oder als grüner Halbleiterlaser mit einer Wellenlänge zwischen 510 und 555 nm. Die Eigenschaften der weiteren optischen Komponenten 12, 14, 16 des ersten Lasersystems 10 sind an die Wellenlänge der Laserstrahlquelle 11 angepasst.

Hinter der Laserstrahlquelle 11 ist die als Beugungsgitter ausgebildete zweite Strahlformungsoptik 16 angeordnet, an der eine Strahlformung erfolgt. Die zweite Strahlformungsoptik 16 kann als Beugungsgitter mit konzentrischen Beugungsstrukturen ausgebildet sein. Die Eigenschaften des Beugungsgitters 16 werden an die Wellenlänge der Laserstrahlquelle 11 angepasst; mittels der Parameter "Gitterform", "Gitterbreite" und "Gitterhöhe" des Beugungsgitters kann der Laserstrahl umgeformt werden. Als zweite optische Achse 17 des Beugungsgitters 16 ist eine Gerade definiert, die durch das Zentrum der konzentrischen Beugungsstrukturen verläuft und senkrecht auf der Oberfläche des Beugungsgitters 16 steht. Hinter dem Beugungsgitter 16 ist die als Kollimationsoptik ausgebildete erste Strahlformungsoptik 12 angeordnet, an der eine Strahlformung erfolgt. Die Kollimationsoptik 12 weist eine plane Eintrittsfläche **18** und eine gekrümmte Austrittsfläche **19** auf. Alternativ kann die Eintrittsfläche 18 als gekrümmte Fläche und die Austrittsfläche 19 als plane Fläche ausgebildet sein oder die Ein- und Austrittsflächen 18, 19 sind als gekrümmte Flächen ausgebildet. Als erste optische Achse 13 der Kollimationsoptik 12 ist eine Gerade definiert, die durch den Krümmungsmittelpunkt der gekrümmten Fläche verläuft und senkrecht auf der planen Fläche steht oder bei zwei gekrümmten Flächen durch die Krümmungsmittelpunkte der gekrümmten Flächen verläuft.

Jede Strahlformungsoptik weist eine optische Achse auf, deren Ausrichtung von der lichtbrechenden Eintrittsfläche und der lichtbrechenden Austrittsfläche abhängt. Bei einer Strahlformungsoptik mit einer gekrümmten ersten Fläche und einer gekrümmten zweiten Fläche ist die optische Achse definiert als Gerade, die durch den ersten Krümmungsmittelpunkt der ersten Fläche und durch den zweiten Krümmungsmittelpunkt der zweiten Fläche verläuft. Bei einer Strahlformungsoptik mit einer gekrümmten Fläche und einer planen Fläche ist die optische Achse definiert als Gerade, die durch den Krümmungsmittelpunkt der gekrümmten Fläche und senkrecht zur planen Fläche verläuft.

Hinter der Kollimationsoptik 12 ist der Kegelspiegel 14 angeordnet. Der Kegelspiegel 14 ist als Abschnitt eines geraden Kegels ausgebildet. Ein Kegel ist von einer Grundfläche und einer Mantelfläche begrenzt, wobei die Grundfläche bei einem geraden Kegel senkrecht zur Kegelachse angeordnet ist. Die Oberfläche des Kegelspiegels 14 umfasst eine kreisförmige Grundfläche **21,** eine Mantelfläche **22** und eine Kegelspitze **23,** wobei die Kegelachse 15 senkrecht zur Grundfläche 21 angeordnet ist und durch die Kegelspitze 23 verläuft. Die Mantelfläche 22 ist für die Wellenlänge der Laserstrahlquelle 11 als reflektierende Mantelfläche ausgebildet und ein auf die Mantelfläche 22 auftreffender Laserstrahl wird an der Mantelfläche 22 überwiegend reflektiert. Der Reflexionsgrad der Mantelfläche 22 hängt unter anderem vom Einfallswinkel und der Polarisation eines auftreffenden Laserstrahls sowie vom Brechungsindex des Kegelspiegels 15 ab.

Die Laserstrahlquelle 11 erzeugt einen divergenten Laserstrahl **25,** der entlang einer Ausbreitungsrichtung **26** ausgesandt wird und auf das Beugungsgitter 16 gerichtet ist. Ohne ein zusätzliches optisches Element in der Laserstrahlquelle 11 ist der Laserstrahl 25 divergent. Als optische Achse **27** des Laserstrahls 25 ist die Symmetrieachse der Strahlverteilung definiert. Der Laserstrahl 25 weist eine Strahlverteilung in Form einer Gauß-Verteilung, einer Lorentz-Verteilung oder einer Bessel-Verteilung auf. Diese Strahlverteilungen weisen keinen abrupten Sprung der Intensität auf und unterstützen die Erzeugung einer scharf begrenzten linienförmigen Lasermarkierung auf einer Projektionsfläche.

Der divergente Laserstrahl 25 trifft auf das Beugungsgitter 16, das den Laserstrahl 25 in einen divergenten Ringstrahl **28** mit einem Intensitätsminimum in der Strahlmitte umformt. Um einen solchen Ringstrahl 28 mit einem Intensitätsminimum in der Strahlmitte zu erzeugen, kann das Beugungsgitter 16 so ausgelegt werden, dass die nullte Beugungsordnung des Laserstrahls und die höheren geraden Beugungsordnungen unterdrückt werden. Alternativ kann das Beugungsgitter 16 so ausgelegt werden, dass die erste Beugungsordnung des Laserstrahls verstärkt wird und die sonstigen Beugungsordnungen unterdrückt werden.

Der divergente Ringstrahl 28 trifft auf die Kollimationsoptik 12, die den divergenten Ringstrahl 28 in einen kollimierten Ringstrahl **29** umformt, der auf den Kegelspiegel 14 gerichtet ist. Der kollimierte Ringstrahl 29 trifft auf die Mantelfläche 22 des Kegelspiegels 14. Der kollimierte Ringstrahl 29 wird an der Mantelfläche 22 des Kegelspiegels 14 umgelenkt und der Kegelspiegel 14 erzeugt einen Laserstrahl **31,** der sich in einer Ausbreitungsebene **32** ausbreitet und auf einer Projektionsfläche **33** eine linienförmige Lasermarkierung **34** mit einem Öffnungswinkel von 360° erzeugt.

Im Ausführungsbeispiel sind die optische Achse 27 des Laserstrahls 25, die zweite optische Achse 17 der zweiten Strahlformungsoptik 16, die erste optische Achse 13 der ersten Strahlformungsoptik 12 und die Kegelachse 15 des Kegelspiegels 14 koaxial zueinander angeordnet. Durch die koaxiale Anordnung der Komponenten des ersten Lasersystems 10 liegt das Intensitätsminimum des Ringstrahls 28 auf der Kegelachse 15 und Beugungseffekte an der Kegelspitze 23 des Kegelspiegels 14 sind reduziert.

Damit der auftreffende Laserstrahl möglichst vollständig an der Mantelfläche 22 des Kegelspiegels 14 reflektiert wird, sollte der Einfallswinkel des Laserstrahls die Bedingung der Totalreflektion erfüllen. Der reflektierte Anteil kann alternativ oder zusätzlich dadurch erhöht werden, dass die Mantelfläche 22 mit einer hochreflektierenden Beschichtung versehen wird. Je höher der reflektierte Anteil des Laserstrahls ist, umso größer ist die Intensität und umso besser ist die Sichtbarkeit der linienförmigen Lasermarkierung 34 auf der Projektionsfläche 33.

Im Ausführungsbeispiel der FIG. 1 ist die Kollimationsoptik 12 hinter dem Beugungsgitter 16 angeordnet. Alternativ kann die Kollimationsoptik 12 auch vor dem Beugungsgitter 16 angeordnet sein. Die Anordnung der Kollimationsoptik 12 hinter dem Beugungsgitter 16 hat den Vorteil, dass eine nicht senkrecht zur Kegelachse 15 verlaufende Ausbreitungsebene 32, in der der Laserstrahl 31 nach dem Kegelspiegel 14 verläuft, mithilfe der Kollimationsoptik 12 korrigiert werden kann. Die Ausrichtung der Ausbreitungsebene 32 ist durch den Austrittswinkel des Laserstrahls 31 festgelegt, der vom Eintrittswinkel des kollimierten Ringstrahls 29 auf die Mantelfläche 22 des Kegelspiegels 14 abhängt. Der Eintrittswinkel des Ringstrahls 29 kann durch die Position der Kollimationsoptik 12 verändert werden. Um die Position zu verändern, ist die Kollimationsoptik 12 parallel zur ersten optischen Achse 13 verstellbar ausgebildet.

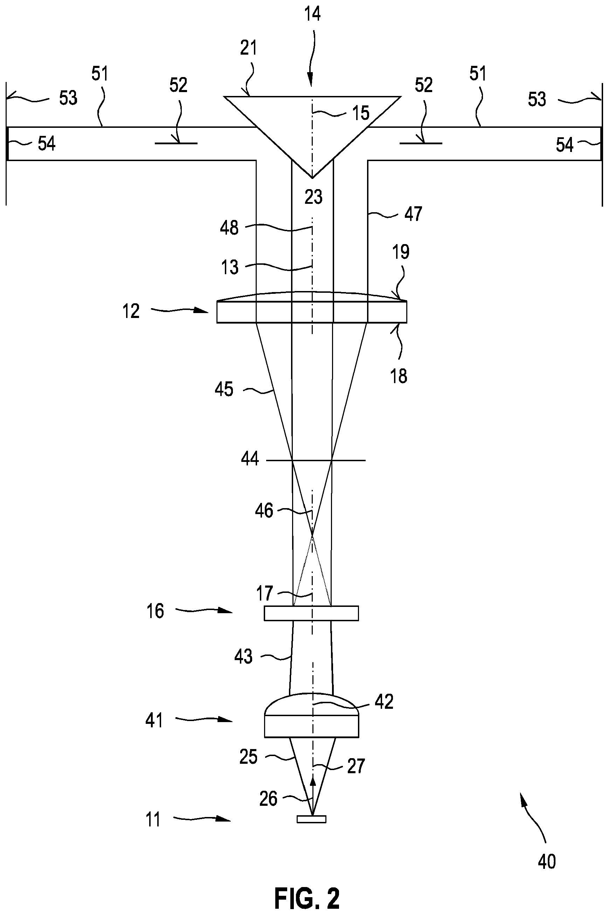

**FIG. 2** zeigt eine zweite Ausführungsform eines erfindungsgemäßen Lasersystems **40** zur Erzeugung einer linienförmigen Lasermarkierung auf einer Projektionsfläche. Das Lasersystem 40 der FIG. 2, das im Folgenden als zweites Lasersystem 40 bezeichnet wird, unterscheidet sich vom ersten Lasersystem 10 der FIG. 1 durch eine dritte Strahlformungsoptik **41** mit einer dritten optischen Achse **42,** wobei die dritte Strahlformungsoptik 41 im Ausführungsbeispiel als Fokussieroptik ausgebildet ist.

Das zweite Lasersystem 40 umfasst die Laserstrahlquelle 11, die erste Strahlformungsoptik 12 mit der ersten optischen Achse 13, den Kegelspiegel 14 mit der Kegelachse 15, die zweite Strahlformungsoptik 16 mit der zweiten optischen Achse 17 und die dritte Strahlformungsoptik 41 mit der dritten optischen Achse 42. Die Komponenten des zweiten Lasersystems 40 sind in der Reihenfolge Laserstrahlquelle 11, dritte Strahlformungsoptik 41, zweite Strahlformungsoptik 16, erste Strahlformungsoptik 12 und Kegelspiegel 14 angeordnet. Dabei sind die erste optische Achse 13 der ersten Strahlformungsoptik 12, die zweite optische Achse 17 der zweiten Strahlformungsoptik 16 und die Kegelachse 15 des Kegelspiegels 14 koaxial zueinander angeordnet.

Die Laserstrahlquelle 11 erzeugt den divergenten Laserstrahl 25, der entlang der Ausbreitungsrichtung 26 ausgesandt wird und auf die Fokussieroptik 41 gerichtet ist. Der divergente Laserstrahl 25 trifft auf die Fokussieroptik 41, die einen fokussierten Laserstrahl **43** mit einer Fokuslage **44** erzeugt. Der fokussierte Laserstrahl 43 trifft auf das Beugungsgitter 16, das den Laserstrahl 43 in einen Ringstrahl **45** mit einem Intensitätsminimum in der Strahlmitte umformt, wobei die Strahlmitte der optischen Achse **46** des Ringstrahls 45 entspricht. Der Ringstrahl 45 trifft auf die Kollimationsoptik 12, die den Ringstrahl 45 in einen kollimierten Ringstrahl **47** mit einer optischen Achse **48** umformt, der auf den Kegelspiegel 14 gerichtet ist. Der kollimierte Ringstrahl 47 wird an der Mantelfläche 22 des Kegelspiegels 14 umgelenkt und der Kegelspiegel 14 erzeugt einen Laserstrahl **51,** der sich in einer Ausbreitungsebene **52** ausbreitet und auf einer Projektionsfläche **53** eine linienförmige Lasermarkierung **54** mit einem Öffnungswinkel von 360° erzeugt.

Die Fokussieroptik 41 ist parallel zur dritten optischen Achse 42 verstellbar ausgebildet. Eine Fokussieroptik 41, die parallel zur dritten optischen Achse 42 verstellbar ist, hat den Vorteil, dass der Ausfallswinkel des Ringstrahls 47 und die Ausrichtung der Ausbreitungsebene 52, in der der Laserstrahl nach dem Kegelspiegel 14 verläuft, verändert werden können. Ziel ist es, mit dem Kegelspiegel 14 eine Ausbreitungsebene 52 zu erzeugen, die senkrecht zur Kegelachse 15 verläuft. Die Ausrichtung der Ausbreitungsebene 52 ist durch den Ausfallswinkel des Laserstrahls festgelegt, der vom Einfallswinkel des Ringstrahls 47 abhängt.

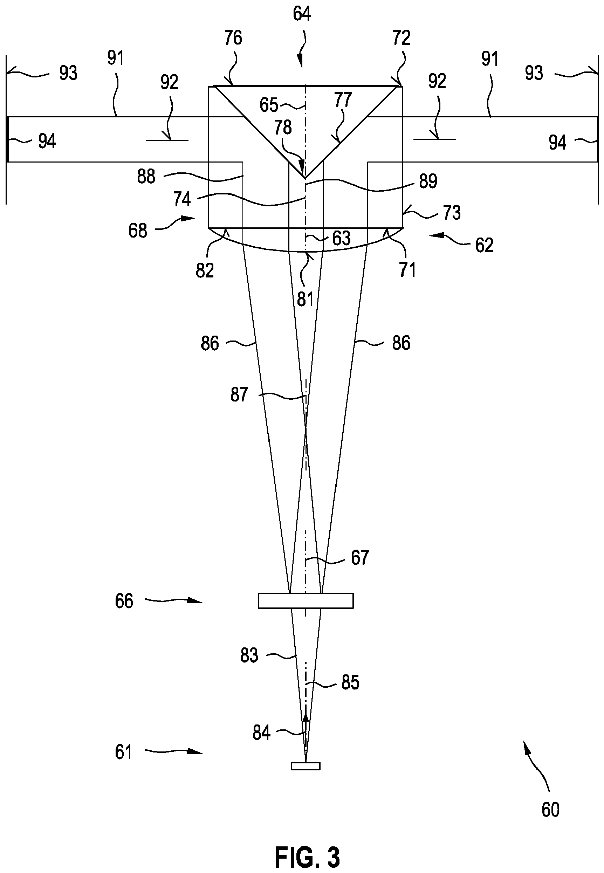

**FIG. 3** zeigt eine dritte Ausführungsform eines erfindungsgemäßen Lasersystems **60** zur Erzeugung einer linienförmigen Lasermarkierung auf einer Projektionsfläche. Das Lasersystem 60, das im Folgenden als drittes Lasersystem 60 bezeichnet wird, umfasst eine Laserstrahlquelle **61,** eine erste Strahlformungsoptik **62** mit einer ersten optischen Achse **63,** einen Kegelspiegel **64** mit einer Kegelachse **65,** und eine zweite Strahlformungsoptik **66** mit einer zweiten optischen Achse **67.** Die erste Strahlformungsoptik 62 ist als Kollimationsoptik und die zweite Strahlformungsoptik 66 als Beugungsgitter ausgebildet. Die Komponenten des dritten Lasersystems 60 sind in der Reihenfolge Laserstrahlquelle 61, zweite Strahlformungsoptik 66, erste Strahlformungsoptik 62 und Kegelspiegel 64 angeordnet. Dabei sind die erste optische Achse 63 der ersten Strahlformungsoptik 62, die zweite optische Achse 67 der zweiten Strahlformungsoptik 66 und die Kegelachse 65 des Kegelspiegels 64 koaxial zueinander angeordnet.

Die Kollimationsoptik 62 und der Kegelspiegel 64 sind in einen gemeinsamen Grundkörper **68** integriert, der in Form eines geraden Zylinders ausgebildet ist. Ein Zylinder ist von zwei parallelen, ebenen Flächen, die als Grundfläche und Deckfläche bezeichnet werden, und einer Mantelfläche begrenzt; bei einem geraden Zylinder sind die Grund- und Deckfläche senkrecht zu einer Zylinderachse angeordnet. Die Oberfläche des Grundkörpers 68 umfasst eine Grundfläche **71,** eine Deckfläche **72,** die parallel zur Grundfläche 71 angeordnet ist, und eine Mantelfläche **73,** die die Grund- und Deckfläche 71, 72 verbindet; die Grund- und Deckfläche 71, 72 verlaufen senkrecht zu einer Zylinderachse **74** des Grundkörpers 68.

Die Grundfläche 71, die Deckfläche 72 und die Mantelfläche 73 sind als Transmissionsflächen für die Wellenlänge der Laserstrahlquelle 61 ausgebildet. Der Transmissionsgrad einer Transmissionsfläche hängt unter anderem vom Einfallswinkel und der Polarisation des Laserstrahls sowie den Brechungsindices der Materialien ab. Der Transmissionsgrad kann dadurch erhöht werden, dass die Transmissionsfläche mit einer Beschichtung versehen wird. Je höher der transmittierte Anteil des Laserstrahls ist, umso größer ist die Intensität und umso besser ist die Sichtbarkeit des Laserstrahls auf einer Projektionsfläche.

Die Kollimationsoptik 62 ist mit der Grundfläche 71 des Grundkörpers 68 verbunden und der Kegelspiegel 64 ist als kegelförmiger Ausschnitt in die Deckfläche 72 des Grundkörpers 68 integriert. Der Grundkörper 68 mit der verbundenen Kollimationsoptik 62 und dem integrierten Kegelspiegel 64 kann monolithisch aus einem Material hergestellt werden. Als Materialien für den Grundkörper 68 eignen sich beispielsweise Glas und Kunststoffe. Die Kollimationsoptik 62 ist im Ausführungsbeispiel als asphärisch gekrümmte Linse ausgebildet; die asphärische Krümmung der Kollimationsoptik 62 kann bei Glas durch Diamantdrehen, Replika, Schleifen und Polieren oder durch Pressen bei hohen Temperaturen aus einem Glaspressling und bei Kunststoff durch Spritzgießen oder Spritzprägen hergestellt werden.

Die Oberfläche des kegelförmigen Ausschnittes umfasst eine kreisförmige Grundfläche **76,** die senkrecht zur Kegelachse 65 angeordnet ist, eine an die Grundfläche 76 angrenzende Mantelfläche **77** und eine Kegelspitze **78.** Die Grundfläche 76 ist auf der Deckfläche 72 des Grundkörpers 68 angeordnet und die Kegelachse 65 verläuft kollinear zur Zylinderachse 74, so dass die Kegelspitze 78 auf der Zylinderachse 74 liegt.

Die Mantelfläche 77 des kegelförmigen Ausschnittes 75 ist als Reflexionsfläche für die Wellenlänge der Laserstrahlquelle 61 ausgebildet. Der Reflexionsgrad der Mantelfläche 77 hängt unter anderem vom Einfallswinkel und der Polarisation des Laserstrahls sowie vom Brechungsindex des Grundkörpers 68 ab. Damit der einfallende Laserstrahl möglichst vollständig an der Mantelfläche 77 reflektiert wird, sollte der Einfallswinkel die Bedingung der Totalreflektion erfüllen. Der reflektierte Anteil kann alternativ oder zusätzlich dadurch erhöht werden, dass die Mantelfläche 77 mit einer hochreflektierenden Beschichtung versehen wird. Je höher der reflektierte Anteil des Laserstrahls ist, umso größer ist die Intensität und umso besser ist die Sichtbarkeit der linienförmigen Lasermarkierung auf der Projektionsfläche.

Die Kollimationsoptik 62 ist in die Grundfläche 71 des Grundkörpers 68 integriert. Die Kollimationsoptik 62 weist eine gekrümmte Eintrittsfläche **81** und eine plane Austrittsfläche **82** auf. Als erste optische Achse 63 der Kollimationsoptik 62 ist eine Gerade definiert, die durch den Krümmungsmittelpunkt der gekrümmten Fläche verläuft und senkrecht auf der planen Fläche steht.

Die Laserstrahlquelle 61 erzeugt einen divergenten Laserstrahl **83,** der sich entlang einer Ausbreitungsrichtung **84** ausbreitet und auf das Beugungsgitter 66 gerichtet ist. Als optische Achse **85** des Laserstrahls ist die Symmetrieachse der Strahlverteilung definiert. Der Laserstrahl 83 weist eine Strahlverteilung in Form einer Gauß-Verteilung, einer Lorentz-Verteilung oder einer Bessel-Verteilung auf. Diese Strahlverteilungen weisen keinen abrupten Sprung der Intensität auf und unterstützen die Erzeugung einer scharf begrenzten linienförmigen Lasermarkierung auf einer Projektionsfläche.

Der divergente Laserstrahl 83 trifft auf das Beugungsgitter 66, das den Laserstrahl 83 in einen Ringstrahl **86** mit einem Intensitätsminimum in der Strahlmitte umformt, wobei die Strahlmitte der optischen Achse **87** des Ringstrahls 86 entspricht. Der divergente Ringstrahl 86 propagiert entlang der Ausbreitungsrichtung 84 und trifft auf die Kollimationsoptik 62. Die Kollimationsoptik 62 formt den divergenten Ringstrahl 86 in einen kollimierten Ringstrahl **88** mit einer optischen Achse **89** um, der auf den Kegelspiegel 64 gerichtet ist. Der kollimierte Ringstrahl 88 wird an der Mantelfläche 77 des Kegelspiegels 64 umgelenkt und der Kegelspiegel 64 erzeugt einen Laserstrahl **91,** der sich in einer Ausbreitungsebene **92** ausbreitet. Der Laserstrahl 91 trifft auf die Mantelfläche 77 des Grundkörpers 68 und verlässt den Grundkörper 68. Der Laserstrahl 91 trifft auf eine Projektionsfläche **93** und erzeugt eine linienförmige Lasermarkierung **94** mit einem Öffnungswinkel von 360°.

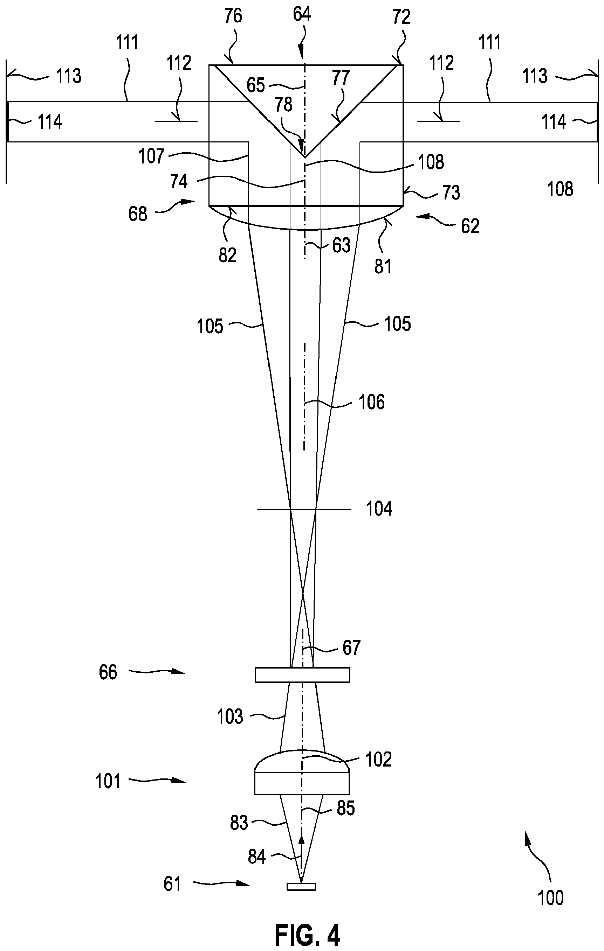

**FIG. 4** zeigt eine vierte Ausführungsform eines erfindungsgemäßen Lasersystems **100** zur Erzeugung einer linienförmigen Lasermarkierung auf einer Projektionsfläche. Das Lasersystem 100 der FIG. 4, das im Folgenden als viertes Lasersystem 100 bezeichnet wird, unterscheidet sich vom dritten Lasersystem 60 der FIG. 3 durch eine dritte Strahlformungsoptik **101** mit einer dritten optischen Achse **102,** wobei die dritte Strahlformungsoptik 101 im Ausführungsbeispiel als Fokussieroptik ausgebildet ist.

Das vierte Lasersystem 100 umfasst die Laserstrahlquelle 61, die erste Strahlformungsoptik 62 mit der ersten optischen Achse 63, den Kegelspiegel 64 mit der Kegelachse 65, die zweite Strahlformungsoptik 66 mit der zweiten optischen Achse 67 und die dritte Strahlformungsoptik 101 mit der dritten optischen Achse 102. Die Komponenten des vierten Lasersystems 100 sind in der Reihenfolge Laserstrahlquelle 61, dritte Strahlformungsoptik 101, zweite Strahlformungsoptik 66, erste Strahlformungsoptik 62 und Kegelspiegel 64 angeordnet. Dabei sind die erste optische Achse 63 der ersten Strahlformungsoptik 62, die zweite optische Achse 67 der zweiten Strahlformungsoptik 66 und die dritte optische Achse 102 der dritten Strahlformungsoptik 101 koaxial zueinander angeordnet.

Die Laserstrahlquelle 61 erzeugt den divergenten Laserstrahl 83, der entlang der Ausbreitungsrichtung 84 ausgesandt wird und auf die Fokussieroptik 101 gerichtet ist. Der divergente Laserstrahl 83 trifft auf die Fokussieroptik 101, die einen fokussierten Laserstrahl **103** mit einer Fokuslage **104** erzeugt. Der fokussierte Laserstrahl 103 trifft auf das Beugungsgitter 66, das den Laserstrahl in einen Ringstrahl **105** mit einem Intensitätsminimum in der Strahlmitte umformt, wobei die Strahlmitte der optischen Achse **106** des Ringstrahls 105 entspricht. Der divergente Ringstrahl 105 trifft auf die Kollimationsoptik 62, die den divergenten Ringstrahl 105 in einen kollimierten Ringstrahl **107** mit einer optischen Achse **108** umformt, der auf den Kegelspiegel 64 gerichtet ist. Der kollimierte Ringstrahl 107 wird an der Mantelfläche 77 des Kegelspiegels 64 umgelenkt und der Kegelspiegel 64 erzeugt einen Laserstrahl 111, der sich in einer Ausbreitungsebene **112** ausbreitet. Der Laserstrahl 111 trifft auf die Mantelfläche 77 des Grundkörpers 68 und verlässt den Grundkörper 68. Der Laserstrahl 111 trifft auf eine Projektionsfläche **113** und erzeugt eine linienförmige Lasermarkierung **114** mit einem Öffnungswinkel von 360°.

Die Fokussieroptik 101 ist parallel zur dritten optischen Achse 102 verstellbar ausgebildet. Eine Fokussieroptik 101, die parallel zur dritten optischen Achse 102 verstellbar ist, hat den Vorteil, dass der Ausfallswinkel des Ringstrahls 107 und die Ausrichtung der Ausbreitungsebene 112, in der der Laserstrahl nach dem Kegelspiegel 64 verläuft, verändert werden können. Ziel ist es, mit dem Kegelspiegel 64 eine Ausbreitungsebene 112 zu erzeugen, die senkrecht zur Kegelachse 65 verläuft. Die Ausrichtung der Ausbreitungsebene 112 ist durch den Ausfallswinkel des Laserstrahls festgelegt, der vom Einfallswinkel des Ringstrahls 107 abhängt.

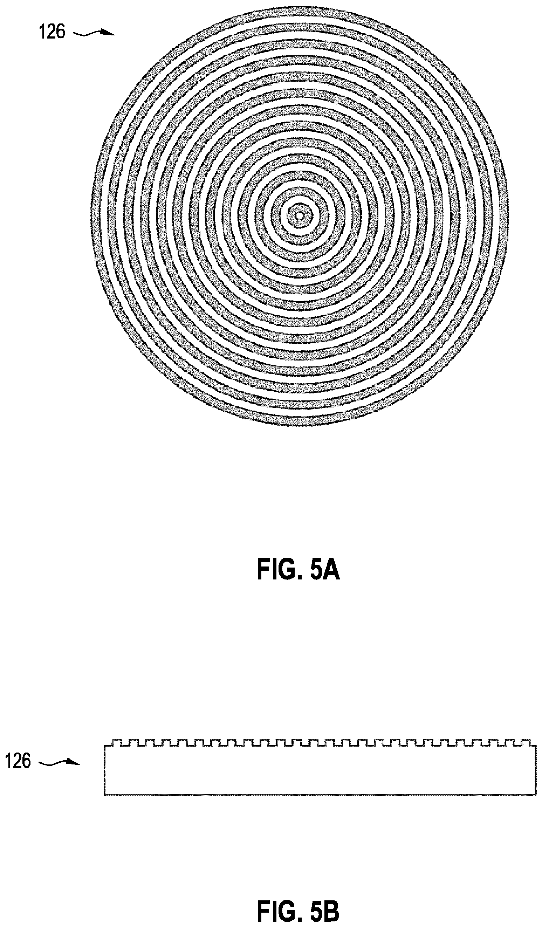

**FIGN. 5A****, B** zeigen ein Beugungsgitter **126,** welches das Beugungsgitter 16 des ersten Lasersystems 10 der FIG. 1 und/oder das Beugungsgitter 66 des dritten Lasersystems 60 der FIG. 3 ersetzen kann. Dabei zeigt FIG. 5A das Beugungsgitter 126 in einer Draufsicht und FIG. 5B zeigt einen Querschnitt.

Die Aufgabe des Beugungsgitters 126 besteht darin, den Laserstrahl, der von der Laserstrahlquelle 11, 61 ausgesandt wird, in einen Ringstrahl mit einem Intensitätsminimum in der Strahlmitte umzuformen. Der Ringstrahl trifft anschließend auf einen Kegelspiegel, der den Ringstrahl umlenkt und in einen Laserstrahl umformt, der sich in einer Ausbreitungsebene ausbreitet. Das Intensitätsminimum des Ringstrahls bietet die Möglichkeit, Beugungseffekte an der Kegelspitze des Kegelspiegels zu reduzieren. Dazu sollte der Ringstrahl so ausgerichtet werden, dass das Intensitätsminimum des Ringstrahls mit der Kegelspitze des Kegelspiegels zusammenfällt.

Das Beugungsgitter 126 weist konzentrische Beugungsstrukturen auf. Die Eigenschaften des Beugungsgitters 126 werden mittels der Parameter "Gitterform", "Gitterbreite" und "Gitterhöhe" an die Wellenlänge der Laserstrahlquelle 11, 61 und den Strahldurchmesser des Laserstrahls angepasst.

## Patentansprüche

1. Lasersystem (10; 40; 60; 100) zur Erzeugung einer linienförmigen Lasermarkierung (34; 54; 94; 114) auf einer Projektionsfläche (33; 53; 93; 113), aufweisend:
▪ eine Laserstrahlquelle (11; 61), die einen Laserstrahl (25; 83) erzeugt und entlang einer Ausbreitungsrichtung (26; 84) aussendet,
▪ eine als Kollimationsoptik ausgebildete erste Strahlformungsoptik (12; 62) mit einer ersten optischen Achse (13; 63) und
▪ einen Kegelspiegel (14; 64), der als gerader Kegel mit einer Kegelachse (15; 65) und einer reflektierenden Mantelfläche (22; 77) ausgebildet ist, wobei der Kegelspiegel (14; 64) im Strahlengang des Laserstrahls hinter der Kollimationsoptik (12; 62) angeordnet ist und die Kegelachse (15; 65) parallel zur ersten optischen Achse (13; 63) ausgerichtet ist,
**dadurch gekennzeichnet, dass** das Lasersystem (10; 40; 60; 100) eine zweite Strahlformungsoptik (16; 66) mit einer zweiten optischen Achse (17; 67) aufweist, wobei die zweite Strahlformungsoptik (16; 66) im Strahlengang des Laserstrahls vordem Kegelspiegel (14; 64) angeordnet ist und den Laserstrahl in einen Ringstrahl (28; 45; 86; 105) mit einem Intensitätsminimum in der Strahlmitte umformt.

2. Lasersystem nach Anspruch 1, **dadurch gekennzeichnet, dass** die zweite optische Achse (17; 67) der zweiten Strahlformungsoptik (16; 66) koaxial zur Kegelachse (15; 65) des Kegelspiegels (14; 64) angeordnet ist.

3. Lasersystem nach einem der Ansprüche 1 bis 2, **dadurch gekennzeichnet, dass** die zweite Strahlformungsoptik (16; 66) als Beugungsgitter ausgebildet ist.

4. Lasersystem nach einem der Ansprüche 1 bis 3, **dadurch gekennzeichnet, dass** die zweite Strahlformungsoptik (16; 66) im Strahlengang des Laserstrahls zwischen der Laserstrahlquelle (11; 61) und der ersten Strahlformungsoptik (12; 62) angeordnet ist.

5. Lasersystem nach Anspruch 4, **dadurch gekennzeichnet, dass** die erste Strahlformungsoptik (12) parallel zur ersten optischen Achse (13) verstellbar ausgebildet ist.

6. Lasersystem nach Anspruch 4, **dadurch gekennzeichnet, dass** die zweite Strahlformungsoptik (16; 66) parallel zur zweiten optischen Achse (17; 67) verstellbar ausgebildet ist.

7. Lasersystem nach Anspruch 4, **dadurch gekennzeichnet, dass** die erste Strahlformungsoptik (12) parallel zur ersten optischen Achse (13) und die zweite Strahlformungsoptik (16; 66) parallel zur zweiten optischen Achse (17; 67) verstellbar ausgebildet ist.

8. Lasersystem nach einem der Ansprüche 1 bis 7, **dadurch gekennzeichnet, dass** das Lasersystem (40; 100) eine als Fokussieroptik ausgebildete dritte Strahlformungsoptik (41; 101) mit einer dritten optischen Achse (42; 102) aufweist.

9. Lasersystem nach Anspruch 8, **dadurch gekennzeichnet, dass** die Fokussieroptik (41; 101) im Strahlengang des Laserstrahls vor der zweiten Strahlformungsoptik (16; 66) angeordnet ist.

10. Lasersystem nach einem der Ansprüche 8 bis 9, **dadurch gekennzeichnet, dass** die Fokussieroptik (41; 101) parallel zur dritten optischen Achse (42; 102) verstellbar ist.

11. Lasersystem nach Anspruch 1, **dadurch gekennzeichnet, dass** der Laserstrahl (25; 83), den die Laserstrahlquelle (11; 61) erzeugt, eine Strahlverteilung in Form einer Gauß-Verteilung, einer Lorentz-Verteilung oder einer Bessel-Verteilung aufweist.
